# EUROPEAN PATENT APPLICATION

(11) **EP 0 670 105 A2**
(43) Date of publication of application: **06.09.1995**
(21) Application number: 95201118.7
(22) Date of filing: 08.05.1991
(51) Int. Cl.: A01D 34/74

(54) **Lawn mower**

(30) Priority: 01.06.1990 US 531991
(62) Divisional of application: 91304131.5
(71) Applicant: Black & Decker Inc., Newark Delaware 19711 (US)
(72) Inventor: Hess, Christopher A., Cambridge, Ontario N3H 3V1 (CA); Hare, Ronald G., Peterborough, Ontario K9J 6Y3 (CA); Jackson, Ronald A., Brockville, Ontario, K6V 1X3 (CA); Bond, Courtney F., Brockville, Ontario, K6V 5T5 (CA)
(74) Representative: Stagg, Diana Christine

(57) **Abstract**

Lawn mower height-adjust systems include three embodiments. Two permit the user to adjust the position of the deck (12) relative to each wheel (18) individually. The third permits the user to adjust the positions of all four wheels (18) simultaneously, aided by a counterbalance system. A modification of the third embodiment is available to automatically bypass the height-adjust mechanism in the event an abnormally high load is placed on the deck (12). One of the two individual systems permits an operator to adjust the position of a respective wheel (18) simply by removing a single nut and washer from an axle bolt. The second individual height-adjust system permits the operator to adjust the height of an individual wheel (18) by using one hand, and without having to disassemble the mechanism. The system which adjusts all four wheels (18) simultaneously links front and rear axle subassemblies (302,304) with a connecting rod (306), and indexes all four wheels (18) simultaneously through a release handle (324) which is recessed in a cavity formed in the lawn mower deck (12). When the operator lifts the release handle (324), he or she may simultaneously grasp a portion of the deck (12) with the same hand and easily raise or lower it to a desired position. A single unitary plastic deck (12) is the foundation for each of the three height-adjust systems, thereby significantly reducing the cost otherwise incurred by manufacturing three separate types of lawn mowers.

## Description

The present invention relates to a system for adjusting the height of a wheeled vegetation-cutting machine above the ground, particularly a lawn mower, whether petrol or electric powered.

Lawn mower height-adjust systems are basically of two types: those in which individual adjustments are made to each wheel height, and those in which the positions of two or more wheels are adjusted simultaneously. Both types of height-adjust systems are found predominantly in use with metal lawn mower decks. Very few relate to mounting a height-adjust system onto a plastic deck and rely upon extra reinforcing to minimise the stresses applied to the deck through the wheel axles. Also, in both metal and plastic applications, many height-adjust systems require a large quantity of parts, are difficult to adjust without tools, and use non-standard components. It is usually necessary for the operator to use both hands to adjust the positions of the wheels relative to the deck. It is also a problem inherent in systems which adjust one wheel at a time to ensure that all four wheels are ultimately in the same position relative to the deck.

Systems which adjust two or more wheels at once solve this problem, but with the disadvantage of requiring the operator to move the considerable weight of the deck, engine or motor and bag. Various counterbalance systems have been developed to permit the operator to adjust the height mechanism without strain, predominantly for a metal lawn mower deck. Inasmuch as metal is a stronger medium than plastic, a minimum of attention was devoted to developing means for handling the stresses on the deck generated by forces directed through the four separate lever/bell crank arrangements. Additionally, conventional systems require several parts, are intricate, are not easily assembled and are expensive. Also the height-adjust lever which is used to move all four wheels simultaneously is typically mounted in an exposed position, such as on the lawn mower push handle itself or on the upper surface of the deck.

Conventionally, if it were desired to manufacture lawn mowers incorporating both types of height-adjust system, it would be necessary to manufacture and maintain in stock two or more different lawn mower configurations. Accordingly, there exists a need to provide a single platform configuration upon which all of the different types of height-adjust systems can readily be mounted both simply and inexpensively. The need has been especially great to provide a single configuration of a unitary plastic lawn mower deck which is adapted to support such systems, and there has existed a corresponding need for height-adjust systems that would be compatible with such a deck.

It is an object of the present invention to provide a lawn mower height-adjust system which permits an operator quickly and easily to adjust the height of a ground-supported vegetation cutter, whether it is the type in which the height of each wheel relative to the deck is adjusted individually, or whether it is the type in which two or more wheels are adjusted simultaneously. A feature by which this is achieved in preferred embodiments of the present invention is by forming four annular axially-extending bosses on the deck side walls such that each boss defines a central bore, an axle slot, and a plurality of recesses formed in a predetermined array about the boss bore. This makes it possible for both types of height-adjust systems to be mounted on the same deck configuration, the individual height-adjust type making use of the predetermined array of recesses to lock an axle subassembly in a predetermined position relative to the deck, and the simultaneous height-adjust system utilising the boss central bore and its outer annular surface to mount an axle subassembly. This reduces the costs that would otherwise be expended in providing multiple decks for several different types of height-adjust systems.

A further feature includes a height-adjust system for individually adjusting the heights of the vegetation cutter or lawn mower wheels which includes an axle subassembly having a cluster of fingers arranged in a predetermined array which are selectively engageable in mating recesses formed in the boss. These fingers are formed on a lock element of the axle subassembly, which prevents the axle from rotating from its position relative to the deck. The axle subassembly includes an axle element which is offset from the axis of the boss bore, so that rotation of the axle element will change the height of the lawn mower deck relative to the ground. The axle subassembly is realisably connected to the deck boss by a nut and bolt, so that to change the height of the wheel relative to the deck, the operator simply unscrews the nut from the bolt, removes the axle subassembly from the boss, and reinserts the lock element fingers in a second position relative to the deck. This step is followed by reconnecting the bolt and nut.

Yet another preferred feature provides an individual height-adjust subassembly which requires no disassembly to change the height. With a single rotation of a cam, the operator withdraws the teeth of a lock member from the boss, and a compression spring automatically reinserts the fingers into the recesses in a new position when the axle subassembly has been rotated a sufficient angular distance.

An additional preferred feature makes it possible to adjust the heights of at least two wheels relative to the deck simultaneously, the two wheels being mounted on an axle at respective offset portions, and the axle being rotatably connected to the deck via the bosses and axle slots. In the case where all four wheels are to be adjusted simultaneously, a connecting rod connects two axle subassemblies such that rotation of one axle through a predetermined arc will rotate the other axle to the same degree. A mechanism is provided which permits the operator to adjust the height of the deck to any of several discrete positions. A counterbalance system is provided which opposes the weight of the lawn mower and allows the operator to adjust the height of the deck simply by grasping a recessed release handle and an adjoining portion of the deck and either raising or lowering the deck to a desired position.

Finally, in the embodiment of the present invention in which four wheels are adjusted simultaneously, a system is provided which permits the lawn mower automatically to short-circuit the effect of an overload force on the deck isolating the overload from the height-adjust mechanism, by enabling the lawn mower deck to engage the ground upon application of the overload.

The present invention therefore provides a ground-supported vegetation cutter includes a deck which defines two side walls, each side wall further defining an axle aperture. An axle subassembly is rotatably connected to the deck in the axle apertures and supports the deck at a predetermined height above the ground. The axle subassembly includes an axle having a straight central portion defining an axle axis and an offset portion formed on each end of the axle central portion. Each axle offset portion extends axially outwardly from each side wall. An axle retainer is rotatably connected to the side wall of the deck adjacent the respective axle aperture. Each axle retainer defines an inner surface configured to match the configuration of the offset portion such that the axle offset portion may be inserted in the axle retainer, the axle retainer inner surface facing, and being adjacent to, a respective side wall. Finally, means are provided for trapping the axle offset portion in the axle retainer inner surface such that, when the axle retainers are connected to deck, the axle is substantially inhibited from moving axially or transversely relative to the deck, yet the axle is enabled to rotate freely relative to the deck. This ground-supported vegetation cutter may also be provided with means for counterbalancing the predetermined weight of the complete lawn mower, which includes at least one torsion spring coaxially mounted on each of two axles. Each torsion spring has one end which is fixedly connected to the axle and one extended end bearing against a deck element, the springs being wound to normally oppose rotation of the axles in a direction corresponding to a lowering of the deck relative to the ground. The ground-supported vegetation cutter of this embodiment of the present invention may also include means for selectively locking the axle including an axle index and a release handle including a handle index member selectively engageable with the axle index member in a plurality of discrete positions. It also includes means for normally biasing the release handle to maintain the handle index member in engagement with the axle index member. Finally, this embodiment of the present invention may include means operatively associated with the means for selectively locking the axle for causing the deck to engage the ground upon the application of an overload force of predetermined magnitude downwardly on the deck.

An embodiment of a vegetation cutter according to the invention will now be further described with reference to the accompanying drawings in which:
Figure 1 is a left front perspective view of an embodiment of a lawn mower according to the present invention;
Figure 2 is a right rear perspective view of the lawn mower of Figure 1;
Figure 3 is a left side elevational perspective view, taken from below, of a portion of the height-adjustment system according to the present invention, showing elements of the system including the deck, axles, axle retainers and connecting rod;
Figure 4 is an exploded elevational perspective detail view of the portion shown in Figure 3, illustrating the relationship of the axle and axle retainer with respect to the boss formed on the deck;
Figure 5 is a perspective view taken from below of the parts shown in Figure 4 assembled to the deck, showing the relationship of an axle retaining clip;
Figure 6 is a side elevational detail view of the release handle;
Figure 7 is a front elevational detail view of the handle taken from line 33-33 of Figure 8;
Figure 8 is an elevational sectional detail view taken along line 34-34 of Figure 8, and showing the relationship of the hand of a user to the handle in the handle chamber portion of the deck;
Figure 9 is an exploded perspective detail view of an inverted lawn mower deck showing the arrangement of parts of the third embodiment of the present invention during the first steps of the assembly process;
Figure 10 is similar to Figure 9, but illustrating the addition of axle retaining clips;
Figure 11 is similar to Figure 10, but illustrating the method for retaining the axles on the deck;
Figure 12 is similar to Figure 11 showing the last steps of the assembly process;
Figure 13 is a left side elevational schematic view of a deck subassembly showing the link between the front and rear axles and the relationship of the release lever to the deck, the deck being in its uppermost position;
Figure 14 is an enlarged sectional detail view taken along the line 40-40 of Figure 13;
Figure 15 is an enlarged elevational detail view of the elements shown in Figure 15;
Figure 15A is an enlarged elevational schematic view illustrating the relationship of the index pin to index plate teeth and notch;
Figure 16 is a perspective view of the rear portion of a lawn mower according to the present invention;
Figure 17 is similar to Figure 15, but with the release lever having been actuated;
Figure 18 is similar to Figure 14, but illustrating the position of the operator's hand relative to the release lever while the lawn mower is in its uppermost position;
Figure 19 is similar to Figure 17 but showing the lawn mower having been lowered to its lowermost position;
Figure 20 is similar to Figure 18 but illustrating the lawn mower in its lowermost position;
Figure 21 is similar to Figure 19 but showing the release lever in a locked position;
Figure 22 is similar to Figure 13 but showing the lawn mower in its lowermost position;
Figure 23 is an elevational detail schematic view showing the relationship of elements of the embodiment just prior to the application of a large overload force upon the deck;
Figure 24 is similar to Figure 23 showing the reaction of the release lever to the application of the overload force;
Figure 25 is similar to Figure 24 showing the deck in contact with the ground; and
Figure 26 is similar to Figure 25 showing the lawn mower having automatically risen to its lowermost operating position, upon removal of the overload force.

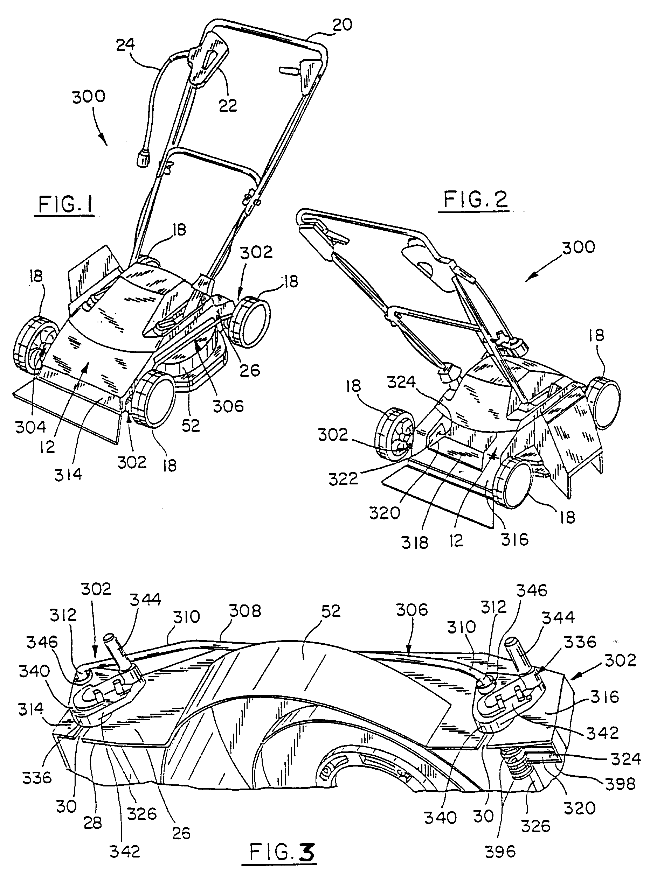

The height-adjust systems of the present invention are usable with lawn mowers powered by any means, whether by electric motor, gasoline engine or hand-power. Figure 1 shows a lawn mower employing the first embodiment of the height-adjust systems of the present invention, the lawn mower being designated generally as 300. The lawn mower 300 includes a deck 12 made from any suitable material, such as metal or plastic. The deck 12 of the lawn mower 300 is preferably a unitary structure made of polypropylene. A driver such as an electric motor (not shown) is covered by a shroud 14. The mower is supported on the ground through first axle subassemblies 16 and wheels 18. The operator guides the mower with a push handle 20 on which is mounted a power switch 22 connected to the motor (not shown) and to a power cord 24. When power is supplied to the motor, it rotates a vegetation-cutter, such as a blade or length of line (not shown) which cuts vegetation, to a first height above the ground. The vegetation cutter is operatively associated with the deck 12 such that adjustment of the deck height will adjust the height of cut. Left and right side axle retainer subassemblies 302, 304 are shown in Figures 1, 2 and 9, and are set in the same position relative to the side of the deck 12. Thus, when a connecting rod 306 is placed in engagement with the left-side subassemblies, movement of one subassembly 302 from a first position to a second position will cause the identical movement in the other left-side subassembly. The connecting rod 306 is formed to clear the involute 52 protruding from the lefts side of the deck 12 in all positions of the axle retainer subassemblies 302 and the connecting rod. With respect to Figure 3, the connecting rod 306 includes a straight portion 308, two angled portions 310 at either end of the straight portion and two axle retainer connection portions 312, each one connected to a respective angled portion, as is shown in Figure 3. Referring once again to Figures 1 and 2, the deck 12 has a front portion 314 and a rear portion 316. As shown in Figure 2, a rear deck cavity 318 is formed in the deck rear portion 316; as viewed from the rear of the mower 300, a recessed release handle chamber 320 is formed in the left portion of the deck 12, with a release handle access port 322 opening into the rear deck cavity 318. A release handle 324 is mounted for vertical pivotal movement within the deck 12 in the recessed release handle chamber 320. This location minimises any opportunity that may exist for vegetation to come in contact with the release handle 324, a condition which is possible in conventional systems using a simultaneous height-adjust feature.

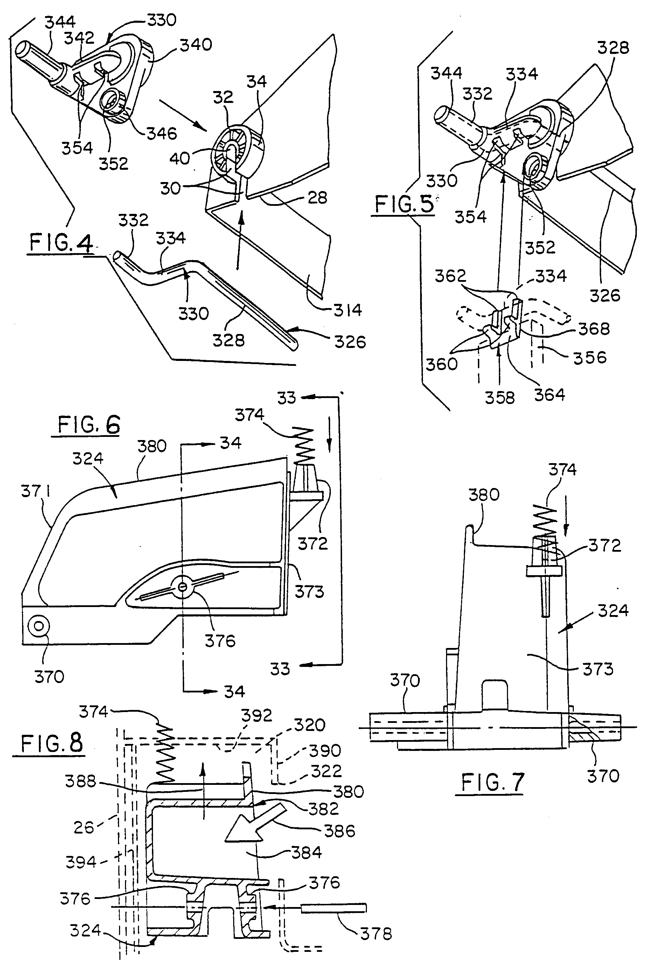

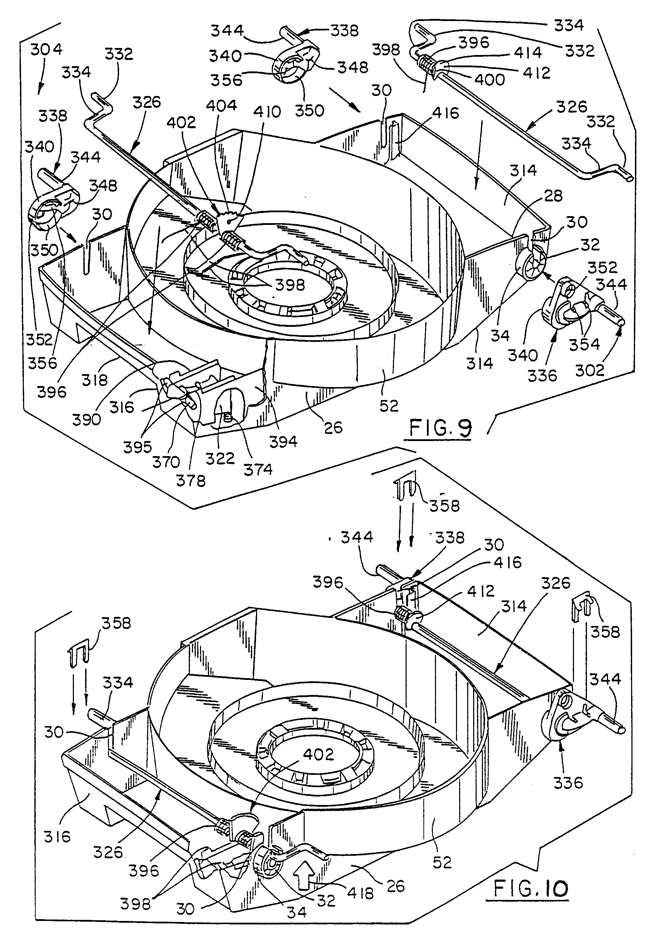

Each set of axle retainer subassemblies 302, 304 are connected by an axle 326. With respect of Figures 4 and 9, the axle 326 includes an axle straight portion 328, two axle offset portions 330, each of which includes a wheel support portion 332 and a right-angled portion 334 connecting the wheel support portion to the axle straight portion 328. In the preferred embodiment, the right-angled portion 334 is generally parallel to the side of the deck 12, and the right-angled portions of a particular axle 326 lie in substantially the same plane, so that, as seen in Figure 9, the respective ends of an axle form similar crank-shaped structures. Accordingly, when the left side axle subassembly 302 located at the deck front portion 314 is rotated by the linking action of the connecting rod 306, the right side axle subassembly 304 is rotated by the same increment. Similarly, when axle 326 at the deck rear portion 316 is rotated, both the left-side and the right-side axle-retainer subassemblies 336, 338 are rotated in unison, such that the respective locations of the rear wheels 18 relative to the deck 12 change simultaneously. Rotation of the axle 326 adjacent the deck rear portion 316 will move the connecting rod 306 and will cause the front set of axle retainer subassemblies 302, 304 to move in unison. Thus, if the operator rotates axle 326, all four wheels will be adjusted simultaneously to be in the same position relative to the deck.

Referring now to Figures 4, 5 and 9 one element of the respective left-side or right-side axle retaining subassemblies 336, 338 is a left-side axle retainer 336 and a right-side axle retainer 338. As will be seen, the axle retainers 336, 338 act as multi-feature fasteners for holding the axles 326 in position on the deck, and for preventing them from falling through the axle slots 30. The left side axle retainer 336 includes a cup-shaped boss-engaging portion 340 which is slidably and rotatably engageable with a respective deck boss 32, which is preferably identical to the bosses discussed with respect to the first two embodiments of the present invention. The boss-engaging portion 340 is connected to an axle-supporting portion 344 through a right-angled portion 342, so that the axle supporting portion is offset relative to the axle 326. A connecting rod engagement portion 346 is also formed offset from the axis of the axle straight portion 328. With respect to Figures 4, 5 and 9, the sides of the axle retainers 336, 338 facing the deck 12 define respective internal axle channels 348 which match the contours of the axle offset portions 330. Also on the sides facing the deck 12 are annular bearing surfaces 350 which are slidably engageable with the boss outer circumferential wall 34. A connecting rod aperture 352 is formed through each connecting rod engagement portion 346 of left side retainers 336 such that they communicate with a right-angle portion of the axle channel 348. Referring now to Figure 5, the axle offset portion 330 is shown in phantom and a left side axle retainer 336 is shown in solid. In the lower portion of Figure 5, an axle channel wall 356 is depicted diagrammatically in phantom adjacent the right-angled portion 334 of axle 326. This represents one portion of the interior of the axle retainer 336. The axle is held in place in the retainer by an axle clip 358, which in the preferred embodiment includes two axle grip portions 360 extending outwardly and perpendicular to a pair of axle wedge portions 362 which are joined together by bridge 364. Detents 368 are formed on the opposite sides of the wedge portions 362 and engage a ledge of axle channel wall 356 upon insertion into the axle retainer 336. Referring to Figure 4, the axle 326 is first inserted into slot 30 and up into the boss bore 40 before the axle retainer 336 is connected to the axle and boss 32. Again referring to Figure 5, the axle 334 is inserted in the axle retainer 336 such that the wheel support portion 332 is coaxially mounted within the retainer axle-supporting portion 344. The axle right angle portion 334 is kept pressed into the axle channel 348 adjacent the right angle portion 342 of the axle retainer 336. Then the axle clip 358 is inserted such that the wedge portions 362 wedge the axle right angle portion 334 against the axle retainer 336. The clip 358 and the axle channel wall 356 are configured such that upon insertion of the clip, the detents 368 lock over the axle channel wall 356. The axle grip portions 360 of the axle clip 358 also engage the outer surface of the retainer right angle portion 334 such that the exteriors of the axle grip portions 360 are flush with the surface of the retainer 336. Inasmuch as the axle retainer boss-engaging portion 340 surrounds the boss 32, and inasmuch as the axle right angle portion 334 co-acts with the axle retainer right angle portion 342, the axle 326 is prevented from axial movement in and out of the bore 40, and is also prevented from moving out of position along the slot 30. However, axle retainer 336 and axle 326 are free to rotate about boss 32, sliding on boss outer circumferential wall 34. The structures of the right side axle retainers 338 are the same as the left side retainers 336, except the connecting rod engagement portion 346 and the connecting rod aperture 352 are omitted, it being necessary to equip the mower with only one connecting rod 306.

One of the key elements of the height-adjust system of the present invention is the release handle 324, which will be described in relation to Figures 6 to 10. Referring first to Figures 6 to 8, the release handle 324 includes a release handle pivot 370 formed adjacent a release handle rear portion 371. A cruciform release handle biaser support 372 is formed adjacent the release handle front portion 373, and as shown supports a release handle biaser or spring 374 which normally biases the release handle 324 away from the upper surface of the deck 12. A pair of index pin bosses 376 are formed in the lower portion of the handle 324, and are bored to accept an index pin 378 with a press fit. A release handle dust baffle 380 is formed on the inboard side of the handle, as shown in Figures 7 and 8, such that when the release handle is pivoted about pivot 370 to return to its normal rest position, the dust baffle 380 closes the space between the release handle access port 322 and the interior of the recessed release handle chamber 320, as is shown diagrammatically in phantom in Figure 8. With further reference to Figure 8, the handle 324 also defines a release handle grip portion 382 which defines a release handle grip recess 384. This permits the user to insert his or her fingers into the recess 384 as depicted by large arrow 386 and lift the handle upwardly as depicted by small arrow 388. The release handle moves within the deck chamber 320 defined by inside wall 390, upper wall 392 and outer wall 394. Referring once again to Figure 9, the release handle 324 is pivotally connected to the deck 12 at pivot slots 395 formed in respective walls 390 and 394 of the release handle chamber.

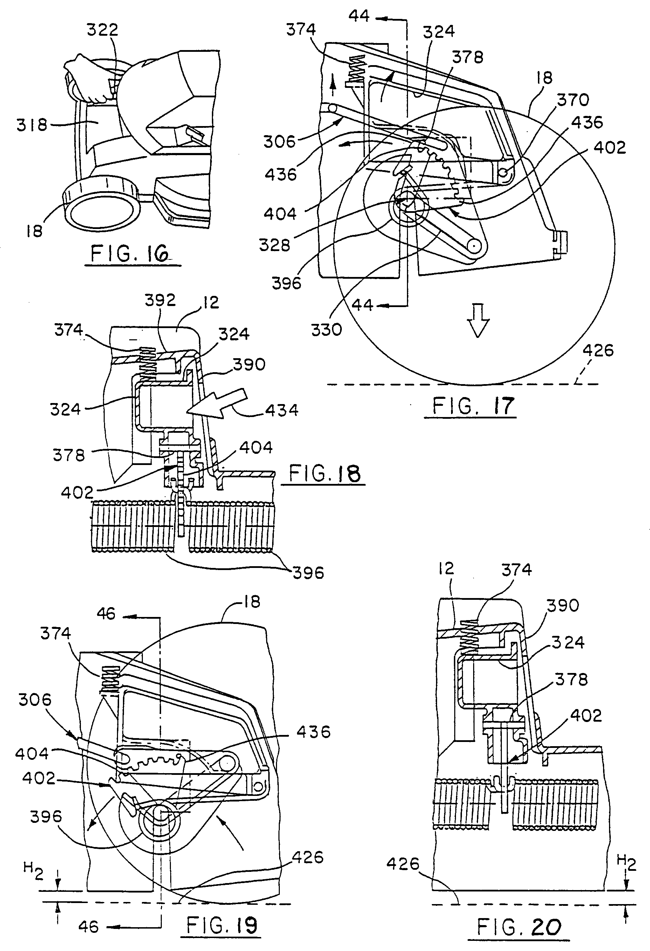

Another feature of the present invention is the use of counterbalance biasers or springs 396 to make the raising or lowering of the deck, complete with engine or motor and associated hardware, as effortless as possible, even though the lawn mower has a weight in the approximate range of 30 to 60 pounds. With respect to the axle at the rear of the mower, as shown in Figures 9, 10 and 14, counterbalance springs 396, in the preferred embodiment, are in the form of torsion springs wrapped loosely about and supported by axle 326. Two springs are used in the preferred embodiment, each with a spring force in the range of 8 to 12 pounds. Each spring 396 has an extended end 398 which bears against a portion of the deck 12, and a retained end 400 which is fixedly connected to the axle 326 through an index plate 402. Accordingly, as a result of the way in which the springs are wound, as shown in Figure 9, coupled with the fact that the extended ends 398 bear against a fixed structure (deck 12), the torsion force of the springs will resist rotation of the axle 326 in a counter-clockwise direction and will normally urge the axle to rotate in a clockwise direction, as viewed from the underside of the left side of the deck 12. This will have the effect of normally urging the deck upwardly with a force counter to that generated by the static weight of the deck, blade, motor or engine, handle and related hardware and leaf bag, if used. The index plate 402, as seen particularly in Figures 9, 10 and 13 to 15A, includes a plurality of index plate teeth 404 separated by index plate notches 406, which are formed in an arcuate array about the outer portion of a sector-shaped plate, preferably formed of metal. With reference to Figure 15A, all of the forwardly (or upwardly) facing surfaces of teeth 404 are ramped as at 408, for the purposes which will be discussed later. The index plate 402 defines at least one index plate connection aperture 410 for attachment to the counterbalance springs 396. In the preferred embodiment, the index plate 402 is welded to the axle 326, but it can be appreciated that any suitable means for fixedly attaching the index plate to the axle will achieve the same purpose. Again referring to Figure 9 and 10, one or more counterbalance biasers or springs 396 may also be connected to the axle 326 at the deck front portion 314. A metal spring retainer plate 412 is welded to axle 326 at the location of each front axle counterbalance spring 396, and defines a spring retainer connecting aperture 414, by which the retained end 400 of the spring is attached to the axle. The spring extended end 398 bears against a spring abutment portion 416 formed on the deck 12. Again, the spring is wound such that it resists counter-clockwise rotation of the axle and normally urges the axle to rotate in a clockwise direction, as viewed from the rear underside of deck 12. This spring has a force in the range of 10 to 15 pounds.

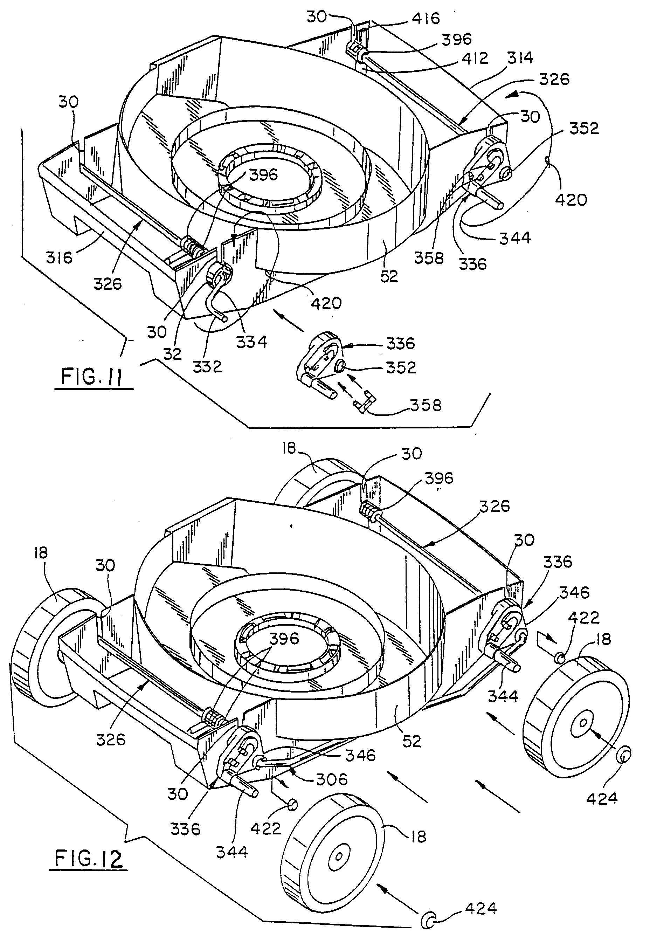

The procedure for assembling the present invention is shown in Figures 9 to 12. The deck 12 is inverted; the counterbalance springs 396 are then placed over the axles 326, and the release handle compression spring 374 is mounted on the release handle biaser support 372 (Figures 6 to 8). Then the release handle 324, with spring 374 attached, is lowered into deck 12 such that the release handle pivot 370 engages the pivot slots 395 formed in the release handle inside and outside walls 390, 394. The index plate and spring retaining plate or plates are preferably fixedly connected to the respective axles prior to assembly to the deck, and the index plate is connected to the axle such that when the axle is loaded into the axle slots 30, the index plate is located adjacent the handle index pin 378, and the spring retainer plate 412 is located adjacent a respective deck abutment portion 416. The axle subassemblies (with springs 396) are placed into the deck via the axle slots 30. All of the axle retainers 336, 338, except the one closest to the release handle 324, are placed over the ends of the axles 326 and onto the bosses 32. The axle clips 358 are then inserted into the three axle retainers 336, 338 to lock the axle retainers to the axles 326, such that the front axle 326 is now fixed to the deck 12, while permitting respective offset portions 330 to pivot about the bosses 32. This is followed by the step of lifting the end of the rear axle 326 closest to the release handle 324 such that the index plate 402 can clear the release handle when the rear axle 326 is rotated. The next step is to rotate the rear axle 326 360° to load its counterbalance springs 396. Then the axle 326 is lowered fully so that the index plate 402 engages the index pin 378 in the release handle 324, and so that the spring extended ends 398 rest on the release handle pivot 370. This step also retains the release handle pivot 370 in place on the deck 12 eliminating the need for additional fasteners. Next, the remaining axle retainer 336 is placed over the axle 326 and onto boss 32. Now, as shown in Figure 11, the remaining clip 358 is inserted into the axle retainer 336, which fixes the rear axle 326 to deck 12. Because of the co-action of the index teeth and notches 404, 406 with the release handle index pin 378, the rear axle 326 will not rotate about the deck bosses 12 unless the release handle 324 is raised sufficiently to disengage the index pin 378 from an index plate notch 406. The release handle biaser or spring 374 normally urges the pin 378 into engagement with an index plate notch 406. Next, the front axle 326 is rotated counter-clockwise 360° to load its counter-balance spring or springs 396. As shown in Figure 12 the connecting rod 306 is then connected to the connecting rod engagement portions 346 of the left side axle retainers 336. Then, cap fasteners 422 are inserted over the ends of the connecting rod 306 at the inboard side of the axle retainers 336, which will now enable the front and rear axles 326 to rotate in unison. Wheels 18 are then installed onto the plastic axle supporting portions 344 of the axle retainers 336, 338, and cap fasteners 424 are attached to the end of the axle 326 to retain the wheels on the axles. This completes the assembly. It can be appreciated that the order of the steps of assembly can be changed and still produce acceptable results.

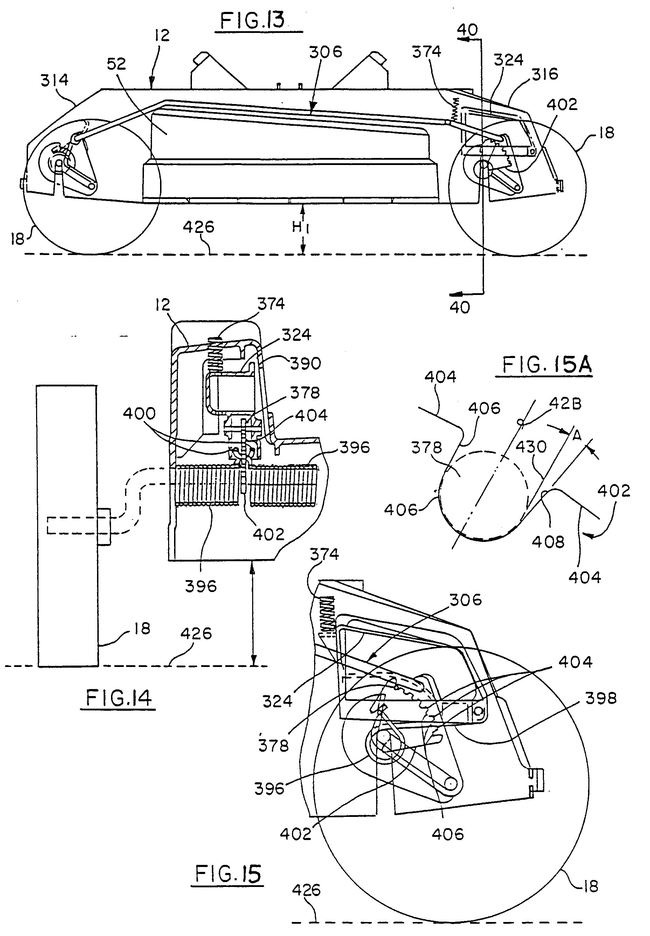

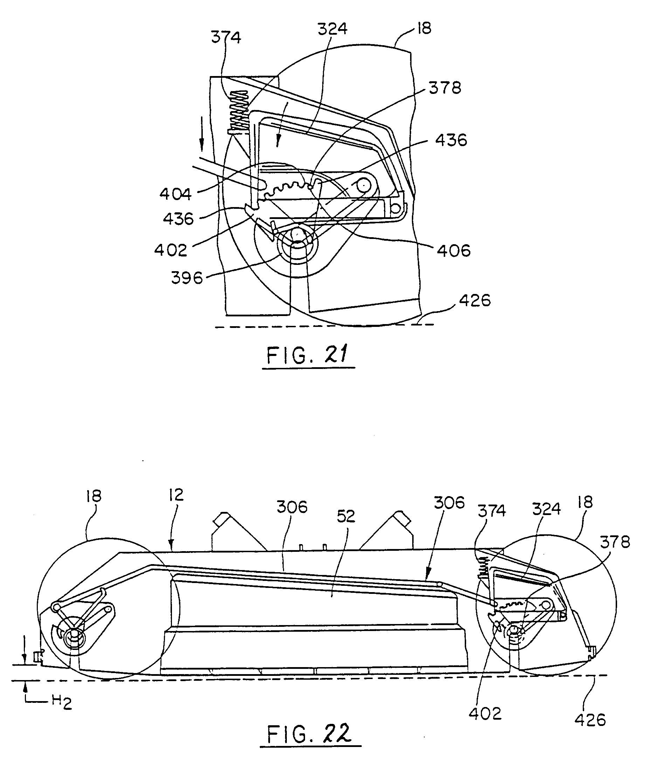

The operation of the height-adjust system of the present invention can be visualised by referring to Figures 13 to 20. Figures 13, 14 and 15 show the lawn mower with the deck at a predetermined height H₁ above the ground. (It can be appreciated that by controlling the height of the bottom of deck 12 with respect to the ground 426, the height of the lawn mower vegetation cutter or blade (not shown) relative to the ground will be necessarily adjusted.) Referring to Figure 15, the index pin 378 is shown in an index plate notch 406 corresponding to the highest elevation or height of the mower deck 12. Referring to Figures 14 and 15, the deck height is locked in the H₁ position by virtue of the co-action of the counterbalance springs 396 and the index plate 402 to exert a clockwise and upwardly-directed force through index plate notch 406 upon index pin 378, which is resisted by the release handle biaser or spring 374. To lower the deck, the operator reaches into the release handle access port 322 as shown in Figure 16 and as indicated by arrow 434 in Figure 18. The operator then raises the release handle 324 which pivots the release handle clockwise about handle pivot 370, as shown in Figure 17. This lifts index pin 378 out of locking engagement with the index plate teeth and notch 404, 406, and will now permit the operator to lower the deck by pressing down on walls 392, 434 with the same hand used to hold the release handle 324 in the upward position against the force of spring 374. By pushing the deck 12 down, the axle 326 is carried down, and the axle offset portion 330, being offset from the axle 326, rotates counter-clockwise as seen in Figure 17 about the axis of the axle straight portion 328. As the axle 326 rotates counter-clockwise, it carries the index plate 402 with it also, so that the index plate teeth 404 are carried past the raised index pin 378, until the operator selects one of the several positions in which to re-lock the height-adjust system. As shown in Figures 19 and 20, the axle has been rotated the entire angular distance spanned by the several teeth formed at the arcuate end the index plate 402. The index pin 378 is normally prevented from going past the terminal positions shown in Figure 19 and Figure 17 by the provision of enlarged teeth 436 upon both circumferential ends of the index plate 402. Figure 21 shows the position of the index pin 378 in locking engagement once again with the index plate 402 upon release by the operator of handle 324, and Figure 22 illustrates the position of the mower deck in the lowermost locked position.

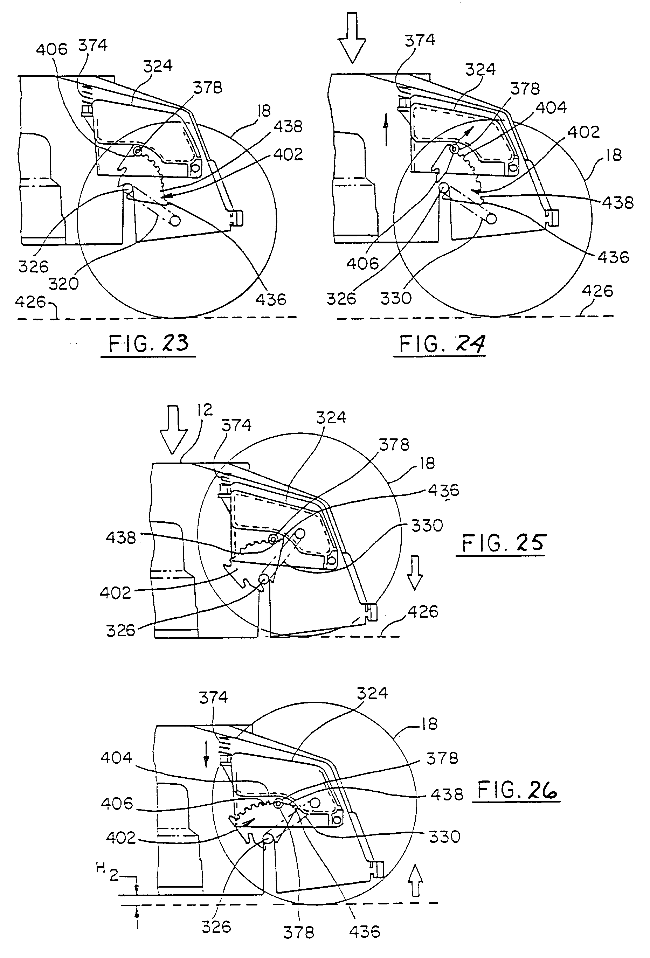

If it is desired, another feature can be incorporated into the present invention which will protect the height-adjust components from the effects of a large overload being placed upon the deck. With reference to Figure 15A and to Figures 23 to 26, the index plate 402 is modified slightly to create a ramped notch surface 408, as seen in Figure 15A, and to add an arcuate land 438 between the last notch 406 and the rear-most enlarged index plate tooth 436. These modifications will enable the height-adjust systems of the present invention to cope with abnormally high external loads being placed on the deck, such as those which are approximately one hundred pounds. This feature will allow the deck to descend until it contacts the ground thereby short-circuiting or bypassing the load so it will not damage the height-adjust mechanism. When the load is removed, the deck 12 will automatically rise and lock itself into the lowest position. This sequence is illustrated in Figures 23 to 26. When an overload is applied to the deck, as shown by the large arrow in Figure 24, it is transmitted to the index plate 402 on the rear axle 326. As shown in Figure 15A, the trailing edge of the notch 406 is formed at an angle A with a line 430 parallel to the radial axis of the index pin 428 when in the locked position. This angled rear-most edge 408 permits the index pin 378 to be ramped up the angled tooth against the spring pressure of the release handle spring 374. The index plate 402 is then free to rotate counter-clockwise as shown in Figure 25 until the index pin 378 engages arcuate land 438. The deck 12 has now bottomed out on the ground 426. When the load has been removed as shown in Figure 26, the counterbalance springs 396 lift the deck 12 until the index pin drops into the first or rear-most notch, locking the mechanism in the lower-most position.

The height-adjust system of the present invention is user-friendly, in that an operator can quickly and effortlessly change the height of the deck relative to all four wheels simultaneously. Although the sequence of operation has been described as the deck moving from a raised to a lowered position, conversely the operator may easily raise the deck from a lowered position as well, using the assist provided by the counterbalance springs. All the operator need do is press the release handle upwardly and grasp the adjacent portion of the deck in the same movement, and then simply apply upward force until the desired height is attained.

## Claims

1. A ground-supported vegetation cutter (10) characterised in that it comprises:
(a) a deck (12) defining two side walls (26) each side wall (26) further defining an axle aperture (30);
(b) an axle subassembly (16) rotatably connected to said deck (12) in said axle apertures (30) for supporting said deck (12) at a predetermined height above the ground.
(c) said axle subassembly (16) including an axle (326) having a straight central portion 9328) defining an axle axis and an offset portion (330) formed on each end of said axle central portion (328);
(d) each axle offset portion (330) extending axially outwardly from each side wall (26);
(e) an axle retainer (302,304) rotatably connected to each side wall (26) on said deck (12) adjacent a respective axle aperture (30);
(f) each said axle retainer 902,304) defining an inner surface (348) configures to match the configuration of said offset portion (330) may be inserted in said axle retainer (302,304), the axle retainer inner surface (348) facing, and being adjacent to, a respective side wall (26); and
(g) means for trapping said axle offset portion (330) in said axle retainer inner surface (348) such that, when said axle retainers (302,304) are connected to said deck (12), said axle (326) is substantially inhibited from moving axially or transversely relative to said deck (12), but said axle (326) is enabled to rotate freely relative to said deck (12).

2. A ground-supported vegetation cutter according to Claim 1, characterised in that each of said axle offset portions (330) includes a wheel-supporting portion (332) lying along an eccentric axis parallel to, but offset from, said axle axis, such that rotation of said axle (326) changes the height of said deck (12) above the ground.

3. A ground-supported vegetation cutter according to Claim 2, characterised in that:
(a) each deck side wall (26) defines two axle apertures (30);
(b) two axle subassemblies (16) are rotatably connected to said deck (12) in said axle apertures (30); and
(c) means for linking said two axle subassemblies (16) are provided such that rotation of one axle subassembly (16) by a predetermined amount results in rotation of the other axle subassembly (16) by the same amount.

4. A ground-supported vegetation cutter according to Claim 3, characterised in that:
(a) said ground-supported vegetation cutter has a predetermined weight; and further comprises
(b) means for counterbalancing said weight;
(c) said means for counterbalancing including at least one torsion spring (396) coaxially mounted on each axle (326);
(d) each said torsion spring (396) having one end (400) fixedly connected to said axle (326) and one free end (398) bearing against a deck element (12), said springs (396) being wound to normally oppose rotation of said axles (326) in a direction corresponding to a lowering of said deck (12) relative to the ground.

5. A ground-supported vegetation cutter according to Claim 4, characterised in that it further comprises means operatively associated with an axle (326) and said deck (12) for selectively locking said axle (326) in a predetermined position relative to said deck.

6. A ground-supported vegetation cutter according to Claim 5, characterised in that:
(a) said means for selectively locking said axle (326) includes an axle index member (402) formed on said axle (326) and a release handle (324) including a handle index member (378) selectively engageable with said axle index member (402) in a plurality of discrete positions; and
(b) means for normally biasing said release handle (324) to maintain said handle index member (378) in engagement with said axle index member (402) in one of said discrete positions.

7. A ground-supported vegetation cutter according to Claim 6, characterised in that it further comprises means operatively associated with said means for selectively locking said axle (326) for causing said deck (12) to engage the ground upon the application of an overload force of predetermined magnitude downwardly on said deck (12).
